# EUROPEAN PATENT APPLICATION

(11) **EP 3 076 703 A1**
(43) Date of publication of application: **05.10.2016**
(21) Application number: 13899992.5
(22) Date of filing: 26.12.2013
(51) Int. Cl.: H04W 28/00

(54) **NETWORK VIDEO ISSUING METHOD, DEVICE AND SYSTEM**

(71) Applicant: Huawei Technologies Co., Ltd., Longgang District Shenzhen, Guangdong 518129 (CN)
(72) Inventor: WEI, Anni, Shenzhen Guangdong 518129 (CN); LI, Zhiming, Shenzhen Guangdong 518129 (CN)
(74) Representative: Maiwald Patentanwalts GmbH
(86) International application number: PCT/CN2013/090601
(87) International publication number: WO 2015/096108

(57) **Abstract**

Embodiments of the present invention disclose a method, an apparatus, and a system for delivering a network video, which relate to the Internet field, and can ensure service quality of a network when the network is congested. The method in the present invention includes: sending a query request to a policy and charging rules function unit PCRF according to a video request sent by user equipment UE; receiving indication information sent by the PCRF; acquiring, when network status information of a cell does not meet a network condition required by the video request service sent by the UE, a providing condition of a video file according to the video request; sending an acknowledgement message to the UE; receiving a second video request sent by the UE; and performing an operation corresponding to the providing condition of the video file, and forwarding, by using an established dedicated bearer, a video file corresponding to the second video request to the UE. The present invention is applicable to a policy and charging control PCC architecture in a wireless network.

## Description

### TECHNICAL FIELD

The present invention relates to the field of Internet technologies, and in particular, to a method, an apparatus, and a system for delivering a network video.

### BACKGROUND

At present, a streaming technology has become a main manner of playing multimedia information on a network, which directly and gradually downloads the multimedia information from the network to a local cache and plays a downloaded part while downloading. A key technology to implement streaming media is streaming transmission. According to an implementation principle, the streaming transmission may be divided into two manners: progressive streaming transmission and real-time streaming transmission. The progressive streaming transmission is also referred to as progressive download, indicating that a user can play media online while downloading a file. Because random access is not supported, the user can only play downloaded content according to an inflow sequence, but cannot jump to content that has not been downloaded. The real-time streaming transmission is a play-as-you-download manner, which may be dynamically adjusted according to a bandwidth and a speed of a user connection, so as to ensure that a media signal bandwidth matches a network connection bandwidth, and the user can perform true real-time playing.

In the prior art, at least the following problems exist: When a user plays video information online, some special scenarios occur, for example, a network is congested. To ensure that the user can continue to watch a video, a client requests to reduce a bit rate of a playing video, or requests not to reduce a bit rate but needs to perform buffering. However, reducing a bit rate of a video file reduces definition of the video, and reduces video quality. Waiting for buffering needs to consume time of the user, which consequently reduces service quality of the network, and causes so much inconvenience when the user watches the video.

### SUMMARY

Embodiments of the present invention provide a method, an apparatus, and a system for delivering a network video, which can resolve a problem of inconvenience brought to a user because of decreased network service quality in the case of network congestion.

To achieve the foregoing objective, the following technical solutions are used in the embodiments of the present invention:
According to a first aspect, an embodiment of the present invention provides a method for delivering a network video, including:
   sending, by a proxy server, a query request to a policy and charging rules function unit PCRF according to a video request sent by user equipment UE, where the video request is used to request a video file of a first bit rate, and the query request is used to query network status information of a cell that the UE accesses;
   receiving, by the proxy server, indication information sent by the PCRF, where the indication information includes the network status information of the cell that the UE accesses, and acquiring the network status information of the cell from the indication information;
   acquiring, by the proxy server when the network status information of the cell does not meet a network condition required by the video request service sent by the UE, a providing condition of the video file according to the video request, where the providing condition is a condition under which a dedicated bearer is used to provide the UE with the video file of the first bit rate;
   sending, by the proxy server, an acknowledgement message to the UE, where the acknowledgement message carries the providing condition of the video file, and the acknowledgement message is used to confirm whether the UE approves the providing condition of the video file;
   receiving, by the proxy server, a second video request sent by the UE, where the second video request includes an indication that the UE approves the providing condition of the video file according to the acknowledgement message; and
   performing, by the proxy server, an operation corresponding to the providing condition of the video file, and forwarding, by using an established dedicated bearer, a video file corresponding to the second video request to the UE.

With reference to the first aspect, in a first possible implementation manner of the first aspect, the acquiring, by the proxy server when the network status information of the cell does not meet a network condition required by the video request service sent by the UE, a providing condition of the video file according to the video request includes:
sending, by the proxy server to the PCRF, a request for the providing condition of the video file corresponding to the video request; and
receiving, by the proxy server, the providing condition sent by the PCRF; or
invoking, by the proxy server, the providing condition from pre-stored information according to the video request.

With reference to the first aspect or the first possible implementation manner of the first aspect, in a second possible implementation manner of the first aspect, before the sending, by the proxy server, an acknowledgement message to the UE, the method further includes:
adding the providing condition to a uniform resource locator URL of the video file of the first bit rate, and constructing the acknowledgement message.

With reference to the first aspect, in a third possible implementation manner of the first aspect, the indication information further includes a recommended bit rate, and the recommended bit rate is a video transmission bit rate that matches the network status information of the cell.

With reference to the third possible implementation manner of the first aspect, in a fourth possible implementation manner of the first aspect, before the sending, by the proxy server, an acknowledgement message to the UE, the method further includes:
adding the network status information to a URL of a video file corresponding to the recommended bit rate, and constructing the acknowledgement message.

With reference to the fourth possible implementation manner of the first aspect, in a fifth possible implementation manner of the first aspect, the second video request includes an indication that the UE requests, according to the acknowledgement message, the video file corresponding to the recommended bit rate;
and in this case, the method further includes:
forwarding, by the proxy server, the video file corresponding to the recommended bit rate to the UE.

With reference to the first aspect, in a sixth possible implementation manner of the first aspect, before the performing, by the proxy server, an operation corresponding to the providing condition of the video file, and forwarding, by using an established dedicated bearer, a video file corresponding to the second video request to the UE, the method further includes:
sending, by the proxy server, a negotiation request to the PCRF, so that the PCRF initiates, according to the negotiation request, a procedure of establishing a dedicated bearer between the UE and the PCRF.

According to a second aspect, an embodiment of the present invention provides a method for delivering a network video, including:
receiving, by a policy and charging rules function unit PCRF, a query request sent by a proxy server;
detecting, by the PCRF according to the query request, network status information of a cell to which user equipment UE is connected; and
sending, by the PCRF, indication information to the proxy server, where the indication information includes the network status information.

With reference to the second aspect, in a first possible implementation manner of the second aspect, before the sending, by the PCRF, indication information to the proxy server, the method further includes:
determining, by the PCRF, a recommended bit rate according to the network status information, where the recommended bit rate is a video transmission bit rate that matches the network status information of the cell.

With reference to the first possible implementation manner of the second aspect, in a second possible implementation manner, the indication information further includes the recommended bit rate.

With reference to the second aspect, in a third possible implementation manner of the second aspect, after the sending, by the PCRF, indication information to the proxy server, the method further includes:
receiving, by the PCRF, a request that is for a providing condition of a video file and that is sent by the proxy server; and
sending, by the PCRF, the providing condition to the proxy server.

With reference to the second aspect, in a fourth possible implementation manner of the second aspect, after the sending, by the PCRF, indication information to the proxy server, the method further includes:
receiving, by the PCRF, a negotiation request sent by the proxy server, where the negotiation request is used to establish, by means of negotiation, a dedicated bearer by the proxy server and the PCRF; and
initiating, by the PCRF, a procedure of establishing a dedicated bearer between the UE and the PCRF.

According to a third aspect, an embodiment of the present invention provides an apparatus for delivering a network video, including:
a sending unit, configured to send a query request to a policy and charging rules function unit PCRF according to a video request sent by user equipment UE, where the video request is used to request a video file of a first bit rate, and the query request is used to query network status information of a cell that the UE accesses;
a receiving unit, configured to receive indication information sent by the PCRF, where the indication information includes the network status information of the cell that the UE accesses, and acquire the network status information of the cell from the indication information;
an acquiring unit, configured to acquire, when the network status information of the cell does not meet a network condition required by the video request service sent by the UE, a providing condition of the video file according to the video request, where the providing condition is a condition under which a dedicated bearer is used to provide the UE with the video file of the first bit rate; where
the sending unit is further configured to send an acknowledgement message to the UE, where the acknowledgement message carries the providing condition of the video file, and the acknowledgement message is used to confirm whether the UE approves the providing condition of the video file; and
the receiving unit is further configured to receive a second video request sent by the UE, where the second video request includes an indication that the UE approves the providing condition of the video file according to the acknowledgement message; and
a forwarding unit, configured to perform an operation corresponding to the providing condition of the video file, and forward, to the UE by using an established dedicated bearer, a video file corresponding to the second video request received by the receiving unit.

With reference to the third aspect, in a first possible implementation manner of the third aspect, the acquiring unit includes:
a sending subunit, configured to send, to the PCRF, a request for the providing condition of the video file corresponding to the video request;
a receiving subunit, configured to receive the providing condition sent by the PCRF; or
an invoking subunit, configured to invoke the providing condition from pre-stored information according to the video request.

With reference to the third aspect or the first possible implementation manner of the third aspect, in a second possible implementation manner of the third aspect, the apparatus further includes:
an adding unit, configured to add the providing condition to a uniform resource locator URL of the video file of the first bit rate, and construct the acknowledgement message.

With reference to the third aspect, in a third possible implementation manner of the third aspect, the indication information further includes a recommended bit rate, and the recommended bit rate is a video transmission bit rate that matches the network status information of the cell.

With reference to the third possible implementation manner of the third aspect, in a fourth possible implementation manner of the third aspect, the adding unit is further configured to add the network status information to a URL of a video file corresponding to the recommended bit rate, and construct the acknowledgement message.

With reference to the fourth possible implementation manner of the third aspect, in a fifth possible implementation manner of the third aspect, the second video request includes an indication that the UE requests, according to the acknowledgement message, the video file corresponding to the recommended bit rate;
and in this case, the forwarding unit is further configured to forward, to the UE, the video file corresponding to the recommended bit rate received by the receiving unit.

With reference to the third aspect, in a sixth possible implementation manner of the third aspect, the sending unit is further configured to send a negotiation request to the PCRF, so that the PCRF initiates, according to the negotiation request, a procedure of establishing a dedicated bearer between the UE and the PCRF.

According to a fourth aspect, an embodiment of the present invention provides an apparatus for delivering a network video, including:
a receiving unit, configured to receive a query request sent by a proxy server;
a detection unit, configured to detect, according to the query request, network status information of a cell to which user equipment UE is connected; and
a sending unit, configured to send indication information to the proxy server, where the indication information includes the network status information.

With reference to the fourth aspect, in a first possible implementation manner of the fourth aspect, the apparatus further includes:
a determining unit, configured to determine a recommended bit rate according to the network status information detected by the detection unit, where the recommended bit rate is a video transmission bit rate that matches the network status information of the cell.

With reference to the first possible implementation manner of the fourth aspect, in a second possible implementation manner of the fourth aspect, the indication information further includes the recommended bit rate.

With reference to the fourth aspect, in a third possible implementation manner of the fourth aspect, the receiving unit is further configured to receive a request that is for a providing condition of a video file and that is sent by the proxy server; and
the sending unit is further configured to send the providing condition to the proxy server.

With reference to the fourth aspect, in a fourth possible implementation manner of the fourth aspect, the receiving unit is further configured to receive a negotiation request sent by the proxy server, and the negotiation request is used to establish, by means of negotiation, a dedicated bearer by the proxy server and the PCRF; and
the apparatus further includes:
an initiation unit, configured to initiate a procedure of establishing a dedicated bearer between the UE and the PCRF.

According to a fifth aspect, an embodiment of the present invention provides a proxy server, including:
a transmitter, configured to send a query request to a policy and charging rules function unit PCRF according to a video request sent by user equipment UE, where the video request is used to request a video file of a first bit rate, and the query request is used to query network status information of a cell that the UE accesses;
a receiver, configured to receive indication information sent by the PCRF, where the indication information includes the network status information of the cell that the UE accesses, and acquire the network status information of the cell from the indication information; and
a processor, configured to acquire, when the network status information of the cell does not meet a network condition required by the video request service sent by the UE, a providing condition of the video file according to the video request, where the providing condition is a condition under which a dedicated bearer is used to provide the UE with the video file of the first bit rate; where
the transmitter is further configured to send an acknowledgement message to the UE, where the acknowledgement message carries the providing condition of the video file, and the acknowledgement message is used to confirm whether the UE approves the providing condition of the video file;
the receiver is further configured to receive a second video request sent by the UE, where the second video request includes an indication that the UE approves the providing condition of the video file according to the acknowledgement message; and
the transmitter is further configured to perform an operation corresponding to the providing condition of the video file, and forward, by using an established dedicated bearer, a video file corresponding to the second video request to the UE.

With reference to the fifth aspect, in a first possible implementation manner of the fifth aspect, the transmitter is further configured to send, to the PCRF, a request for the providing condition of the video file corresponding to the video request;
the receiver is further configured to receive the providing condition sent by the PCRF; or
the processor is further configured to invoke the providing condition from pre-stored information according to the video request.

With reference to the fifth aspect or the first possible implementation manner of the fifth aspect, in a second possible implementation manner of the fifth aspect, the processor is further configured to add the providing condition to a uniform resource locator URL of the video file of the first bit rate, and construct the acknowledgement message.

With reference to the fifth aspect, in a third possible implementation manner of the fifth aspect, the indication information further includes a recommended bit rate, and the recommended bit rate is a video transmission bit rate that matches the network status information of the cell.

With reference to the third possible implementation manner of the fifth aspect, in a fourth possible implementation manner of the fifth aspect, the processor is further configured to add the network status information to a URL of a video file corresponding to the recommended bit rate, and construct the acknowledgement message.

With reference to the fourth possible implementation manner of the fifth aspect, in a fifth possible implementation manner of the fifth aspect, the second video request includes an indication that the UE requests, according to the acknowledgement message, the video file corresponding to the recommended bit rate;
and in this case, the transmitter is further configured to forward the video file corresponding to the recommended bit rate to the UE.

With reference to the fifth aspect, in a sixth possible implementation manner of the fifth aspect, the transmitter is further configured to send a negotiation request to the PCRF, so that the PCRF initiates, according to the negotiation request, a procedure of establishing a dedicated bearer between the UE and the PCRF.

According to a sixth aspect, an embodiment of the present invention provides a policy and charging rules function, including:
a receiver, configured to receive a query request sent by a proxy server;
a processor, configured to detect, according to the query request, network status information of a cell to which user equipment UE is connected; and
a transmitter, configured to send indication information to the proxy server, where the indication information includes the network status information.

With reference to the sixth aspect, in a first possible implementation manner of the sixth aspect, the processor is further configured to determine a recommended bit rate according to the network status information, and the recommended bit rate is a video transmission bit rate that matches the network status information of the cell.

With reference to the first possible implementation manner of the sixth aspect, in a second possible implementation manner of the sixth aspect, the indication information further includes the recommended bit rate.

With reference to the sixth aspect, in a third possible implementation manner of the sixth aspect, the receiver is further configured to receive a request that is for a providing condition of a video file and that is sent by the proxy server; and
the processor is further configured to send the providing condition of the video file to the proxy server.

With reference to the sixth aspect, in a fourth possible implementation manner of the sixth aspect, the receiver is further configured to receive a negotiation request sent by the proxy server, and the negotiation request is used to establish, by means of negotiation, a dedicated bearer by the proxy server and the PCRF; and
the processor is further configured to initiate a procedure of establishing a dedicated bearer between the UE and the PCRF.

According to a seventh aspect, an embodiment of the present invention provides a system for delivering a network video, including the proxy server according to the fifth aspect and the policy and charging rules function according to the sixth aspect.

In the prior art, when some special scenarios occur on a network, for example, the network is congested, to ensure that a user can continue to watch a video, a client requests to reduce a bit rate of a playing video, or requests not to reduce a bit rate but needs to perform caching, which reduces service quality of the network, and causes so much inconvenience when the user watches the video. Compared with the prior art, according to the method, the apparatus and the system for delivering a network video that are provided in the embodiments of the present invention, a proxy server is configured in a PCC architecture, and the proxy server requests, according to a video sent by UE, a PCRF to query a network status of a network. When network status information of a cell does not meet a network condition required by a video request service sent by the UE, the proxy server sends an acknowledgement message to the UE, and inquires whether the user approves using, under a providing condition of a video file, the video file. When the user returns a result of approving the providing condition, the proxy server requests the PCRF to establish a dedicated bearer of video transmission for the UE, and uses the dedicated bearer to forward, to user equipment, a video file of a bit rate required by the user. Therefore, in the case of network congestion, a clear video file can still be provided, and the service quality of the network can still be ensured.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is an architecture diagram according to an embodiment of the present invention;
FIG. 2 is a flowchart of a method according to an embodiment of the present invention;
FIG. 3 is a flowchart of a method according to still another embodiment of the present invention;
FIG. 4A and FIG. 4B are a flowchart of a method according to still another embodiment of the present invention;
FIG. 5 and FIG. 6 are schematic structural diagrams of an apparatus according to still another embodiment of the present invention;
FIG. 7 and FIG. 8 are schematic structural diagrams of an apparatus according to still another embodiment of the present invention;
FIG. 9 is a schematic structural diagram of an apparatus according to still another embodiment of the present invention;
FIG. 10 is a schematic structural diagram of an apparatus according to still another embodiment of the present invention; and
FIG. 11 is a schematic structural diagram of a system according to still another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

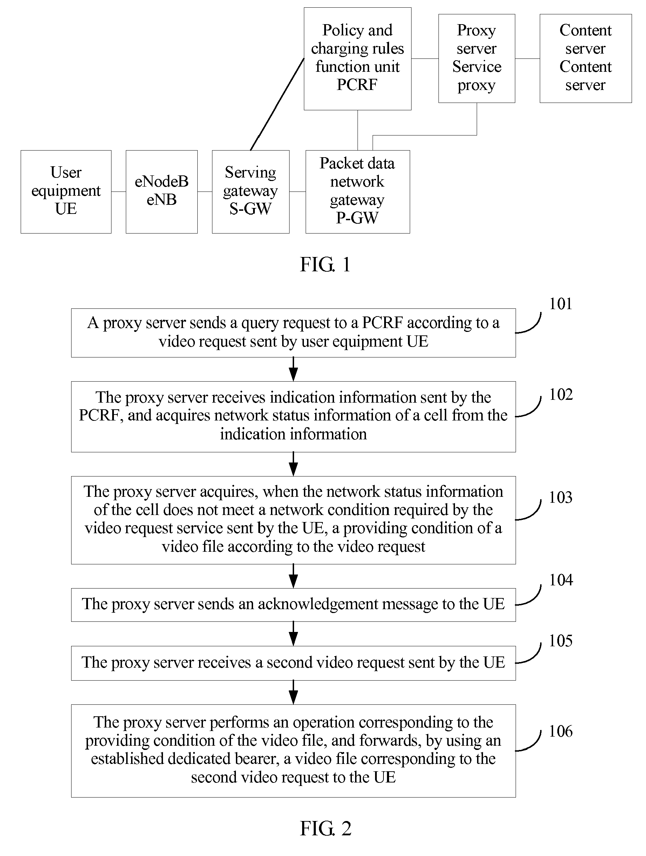

As shown in FIG. 1, technical solutions provided in this embodiment of the present invention may be applied to a PCC (Policy and Charging Control, policy and charging control) architecture in a wireless network. UE (User Equipment, user equipment) is user equipment, which enables a user to communicate by using a wireless communications network. An eNB (evolved Node B, evolved Node B) corresponds to the UE, and is responsible for radio bearer control, radio access control, connection mobility control, and uplink-downlink dynamic resource allocation of the UE. A P-GW (Packet Data Network Gateway, packet data network gateway) is responsible for connecting the UE to a packet data network. A PCRF (Policy charging and rules function, policy and charging rules function) is a policy decision point for policy and charging control of an IP (Internet Protocol, Internet Protocol) bearer resource and a service data flow in a network. A content server Content Server provides the UE with video service data. A proxy server Service Proxy is introduced into the present invention. As an AF (Application Function, application function) in the PCC architecture, the proxy server is connected to the PCRF by using an Rx interface. When a video request of a user passes through the proxy server, the proxy server may interact with the PCRF, the P-GW, and the content server.

An embodiment of the present invention provides a method for delivering a network video. As shown in FIG. 2, the method includes the following steps:
101. A proxy server sends a query request to a PCRF according to a video request sent by user equipment UE.

The video request is used to request a video file of a first video bit rate, the video request includes video bit rate information (that is, the first video bit rate), the query request carries the video bit rate information and video information related to the video requested by the UE, and the query request is used to query network status information of a cell that the UE accesses.

102. The proxy server receives indication information sent by the PCRF, and acquires network status information of a cell from the indication information.

The indication information includes the network status information of the cell that the UE accesses.

It should be noted that the indication information may further include a recommended bit rate, and the recommended bit rate is a video transmission bit rate that matches the network status information of the cell.

103. The proxy server acquires, when the network status information of the cell does not meet a network condition required by the video request service sent by the UE, a providing condition of a video file according to the video request.

For example, a situation in which the network status information of the cell does not meet the network condition required by the video request service sent by the UE may include: a situation in which a user requests a video file of a fixed bit rate by using the UE and a current network of the cell that the UE accesses is relatively congested, and therefore, when a video file of a bit rate requested by the user is sent to the UE, video playing encounters a network delay and the user cannot smoothly watch the requested video file; or another situation in which video transmission is affected.

The providing condition is a condition under which a dedicated bearer is used to provide the UE with the video file of a first bit rate. The providing condition may include: paid providing (such as charging), an inserted advertisement, or a push message. The providing condition may be any one or several combinations of the foregoing conditions, or certainly may be another condition. Different providing conditions correspond to different operations. There are two manners in which the proxy server acquires the providing condition of the video file. One manner is that the providing condition of the video file is stored in the PCRF, and when acquiring the providing condition of the video file, the proxy server needs to send a request for the providing condition of the video file to the PCRF, and then receives the providing condition of the video file sent by the PCRF. The other manner is that the providing condition of the video file is pre-stored in the proxy server, and when acquiring the providing condition of the video file, the proxy server invokes the providing condition of the video file from pre-stored information.

104. The proxy server sends an acknowledgement message to the UE.

The acknowledgement message carries the providing condition of the video file, and the acknowledgement message is used to confirm whether the UE approves the providing condition of the video file. When the network status information of the cell does not meet the network condition required by the video request service sent by the UE, the proxy server adds the providing condition of the video file to a URL of the video file of the first bit rate, adds the network status information to a URL of a video file corresponding to the recommended bit rate, constructs the acknowledgement message, and sends the acknowledgement message to the UE.

It should be noted that the acknowledgement message may further include a video file of another bit rate corresponding to the video file requested by the UE, and the proxy server adds the providing condition to a URL of the video file of the another bit rate for being selected by the user.

105. The proxy server receives a second video request sent by the UE.

The second video request includes an indication that the UE approves the providing condition of the video file according to the acknowledgement message.

It should be noted that when the user selects the video file including the network status information, the second video request includes an indication that the UE requests, according to the acknowledgement message, the video file corresponding to the recommended bit rate.

106. The proxy server performs an operation corresponding to the providing condition of the video file, and forwards, by using an established dedicated bearer, a video file corresponding to the second video request to the UE.

If the second video request includes an indication approving the providing condition of the video file, the proxy server performs the operation corresponding to the providing condition of the video file; and sends a negotiation request to the PCRF, so that the PCRF initiates, according to the negotiation request, a procedure of establishing a dedicated bearer between the UE and the PCRF, and then the proxy server forwards, by using the dedicated bearer, the video file corresponding to the second video request to the UE. If the second video request includes an indication of the video file corresponding to the recommended bit rate, the proxy server forwards the video file corresponding to the recommended bit rate to the UE.

The providing condition may include: paid providing (such as charging), an inserted advertisement, or a push message. The providing condition may be any one or several combinations of the foregoing conditions, or certainly may be another condition. Different providing conditions correspond to different operations. For example, when the providing condition is the paid providing, the proxy server performs a charging operation; when the providing condition is the inserted advertisement, the proxy server performs an operation of inserting an advertisement into the provided video file; and when the providing condition is the push message, the proxy server performs an operation of pushing a message when the video file is provided. Certainly, the providing condition may also be another situation, and in this case, the proxy server performs an operation corresponding to the another situation.

In the prior art, when some special scenarios occur on a network, for example, the network is congested, to ensure that a user can continue to watch a video, a client requests to reduce a bit rate of a playing video, or requests not to reduce a bit rate but needs to perform caching, which reduces service quality of the network, and causes so much inconvenience when the user watches the video. Compared with the prior art, according to this embodiment of the present invention, a proxy server is configured in a PCC architecture, and the proxy server requests, according to a video sent by UE, a PCRF to query a network status of a network. When network status information of a cell does not meet a network condition required by a video request service sent by the UE, the proxy server sends an acknowledgement message to the UE, and inquires whether the user approves using, under a providing condition of a video file, the video file. When the user returns a result of approving the providing condition, the proxy server requests the PCRF to establish a dedicated bearer of video transmission for the UE, and uses the dedicated bearer to forward, to user equipment, a video file of a bit rate required by the user. Therefore, in the case of network congestion, a clear video file can still be provided, and the service quality of the network can still be ensured.

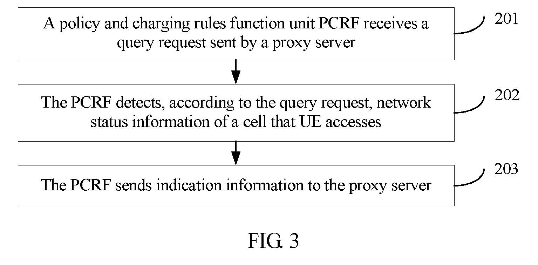

Still another embodiment of the present invention provides a method for delivering a network video. As shown in FIG. 3, the method includes the following steps:
201. A PCRF receives a query request sent by a proxy server.

The query request carries video bit rate information.

202. The PCRF detects, according to the query request, network status information of a cell that UE accesses.

203. The PCRF sends indication information to the proxy server.

The indication information includes the network status information of the cell that the UE accesses and video information related to a video requested by the UE.

It should be noted that the PCRF determines a recommended bit rate according to the network status information of the cell that the UE accesses and the video information carried in the query request, and the recommended bit rate is a video transmission bit rate that matches the network status information of the cell that the UE accesses, and in this case, the indication information further includes the recommended bit rate.

Optionally, if a providing condition of a video file is stored in the PCRF, when acquiring the providing condition of the video file, the proxy server needs to send a request for the providing condition of the video file to the PCRF. After receiving the request that is for the providing condition of the video file and that is sent by the proxy server, the PCRF sends the providing condition of the video file to the proxy server.

Further, when the proxy server needs to use a dedicated bearer to transmit the video file, the PCRF receives a negotiation request sent by the proxy server, where the negotiation request is used to establish, by means of negotiation, the dedicated bearer by the proxy server and the PCRF, and then initiates a procedure of establishing the dedicated bearer.

In the prior art, when some special scenarios occur on a network, for example, the network is congested, to ensure that a user can continue to watch a video, a client requests to reduce a bit rate of a playing video, or requests not to reduce a bit rate but needs to perform caching, which reduces service quality of the network, and causes so much inconvenience when the user watches the video. Compared with the prior art, according to this embodiment of the present invention, a proxy server is configured in a PCC architecture, and the proxy server requests, according to a video sent by UE, a PCRF to query a network status of a network. When network status information of a cell does not meet a network condition required by a video request service sent by the UE, the proxy server sends an acknowledgement message to the UE, and inquires whether the user approves using, under a providing condition of a video file, the video file. When the user returns a result of approving the providing condition, the proxy server requests the PCRF to establish a dedicated bearer of video transmission for the UE, and uses the dedicated bearer to forward, to user equipment, a video file of a bit rate required by the user. Therefore, in the case of network congestion, a clear video file can still be provided, and the service quality of the network can still be ensured.

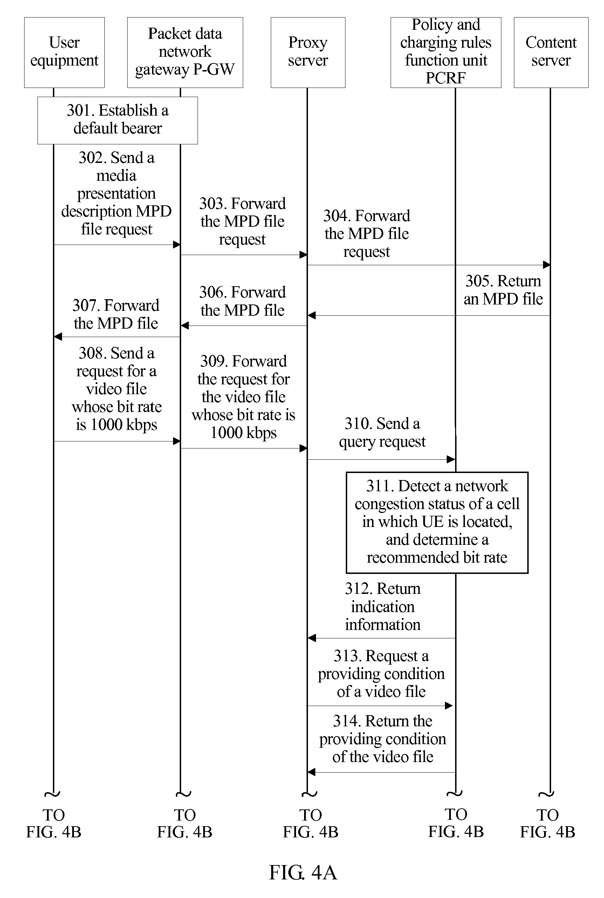

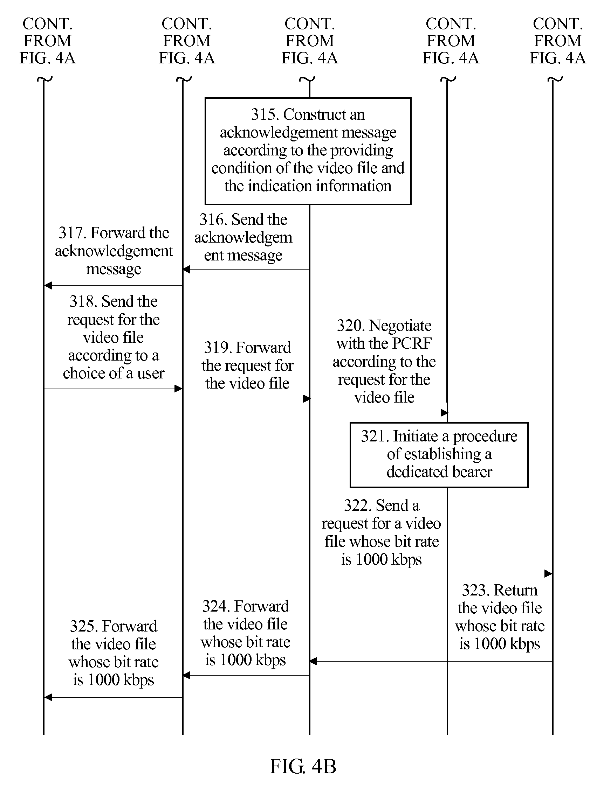

Still another embodiment of the present invention provides a method for delivering a network video, which is applied to a PCC architecture. Using a process of streaming media file transmission based on DASH (Dynamic Adaptive Steaming over Hypertext transfer protocol, Dynamic Adaptive Steaming over Hypertext Transfer Protocol) technology as an example, a media file of 3GP-DASH includes two parts: an MPD (Media Presentation Description, media presentation description) file and a streaming media file. As shown in FIG. 4A and FIG. 4B, the method includes the following steps:
301. Establish a default bearer between UE and a P-GW.

When a user powers on UE, and performs network attachment, a network establishes the default bearer for the user, and ensures a basic service requirement of the user.

302. The UE sends an MPD file request.

The UE requests a file related to video media description. In this embodiment, a media file of 3GP-DASH is used as an example, and in this case, a file requested by the UE is the MPD file.

303. The P-GW detects a video service event, and forwards the MPD file request to a corresponding proxy server.

It should be noted that the proxy server may correspond, on a one-to-one basis, to the P-GW, or may be allocated according to an area or the like, that is, a P-GW within an area corresponds to one proxy server. The P-GW may select a corresponding proxy server according to its own policy.

304. The proxy server detects the video service event, and forwards the MPD file request to a content server.

After receiving the MPD file request, the proxy server detects the video service event, and forwards the MPD file request to the content server.

305. The content server returns the MPD file to the proxy server.

306. The proxy server forwards the MPD file to the P-GW.

The proxy server may acquire, by parsing MPD information, information related to a video.

307. The P-GW forwards the MPD file to the UE.

308. The UE sends a request for a video file whose bit rate is 1000 kbps.

The request that is for the video file and that is sent by the UE includes information about the video file. In this embodiment, the UE requests the video file whose bit rate is 1000 kbps, and in this case, the request for the video file includes a bit rate of the video file.

309. The P-GW forwards, to the corresponding proxy server, the request for the video file whose bit rate is 1000 kbps.

310. After receiving the request for the video file, the proxy server sends a query request to a PCRF.

The query request carries information about a video service, such as a video request length, video resolution, and a video request bit rate level.

311. The PCRF detects a network congestion status of a cell in which the UE is located, and determines a recommended bit rate.

The PCRF may learn a network congestion situation according to the information about the video service and a network status of the cell in which the UE is located. If the PCRF detects that a network is congested, a video transmission bit rate that matches network status information of the cell, that is, the recommended bit rate is obtained according to a corresponding policy.

In this embodiment, using the network congestion as an example, the network congestion is classified into three levels: light congestion Light Congestion, medium congestion Medium Congestion, and high congestion High Congestion. For example, the PCRF detects that the network is in medium congestion, and gives a recommended bit rate of 540 kbps according to a bit rate of the video file requested by the UE and the network congestion situation.

312. The PCRF returns indication information to the proxy server.

Optionally, if the PCRF detects that the network is not congested, when the video file requested by the UE is transmitted, service quality of the network is not affected, and in this case, the PCRF returns the indication information including the network congestion situation to the proxy server. If detecting that the network is congested, the PCRF returns the indication information including the network congestion situation and the recommended bit rate to the proxy server. In this embodiment, the indication information returned to the proxy server includes the medium congestion and the recommended bit rate of 540 kbps.

It should be noted that if the network is not congested, after receiving the indication information of the PCRF, the proxy server forwards the request of the UE for the video file to the content server according to content of the indication information, and after receiving a video file returned by the content server, forwards the video file to the P-GW, which then forwards the video file to the UE. If the network is congested, after the proxy server receives the indication information of the PCRF, step 313 is executed.

313. The proxy server requests the providing condition of the video file from the PCRF according to the indication information of the PCRF.

After receiving the indication information that the PCRF is in the medium congestion and the recommended bit rate is 540 kbps, the proxy server determines that the network is in the medium congestion, and requests the providing condition of the video file from the PCRF.

It should be noted that in step 310, the query request sent by the proxy server may not carry the video information, and only the network status is queried. When the network is in a congested state, and the proxy server requests the providing condition of the video file from the PCRF, the request carries corresponding video information.

314. The PCRF returns the providing condition of the video file to the proxy server.

The providing condition of the video file may be a payment policy, advertisement insertion, or the like. The PCRF replies to a request of the proxy server according to a preset providing condition of the video file.

It should be noted that the providing condition of the video file may also be preset in the proxy server, and in this way, the proxy server directly invokes corresponding information from the providing condition of the video file without a need of executing step 313 and step 314. When the providing condition of the video file is preset in the proxy server, the query request sent by the proxy server in step 310 may not carry the video information, and only a network status is queried. In step 312, the indication information returned to the proxy server by the PCRF includes only network congestion information, and the proxy server then may determine a recommended bit rate according to the indication information and the video information.

315. The proxy server constructs an acknowledgement message according to the providing condition of the video file and the indication information.

For example, the network is in the medium congestion, the proxy server adds the providing condition of the video file to a URL (Uniform Resource Locator, uniform resource locator) of a file requested by the UE, adds the network status information to a URL of a video file corresponding to the recommended bit rate, and constructs the acknowledgement message.

It should be noted that the acknowledgement message may further include a video file of another bit rate corresponding to the video file requested by the UE, and the proxy server adds the providing condition to a URL of the video file of the another bit rate for being selected by the user. The network status and negotiation of an operator for improving service quality are implemented by extending the URL. A method is that corresponding parameter information is added to the URL to give notification on the network status and the providing condition corresponding to the video file. The inserted parameter information needs to be expressed by using a Web API ((Application Programming Interface), application programming interface) description language (such as a WADL, Web Application Description Language, Web application description language), so that a network entity can properly parse the URL.

For example, the file requested by the UE is http://sever.example.com /media_1M.mp4 HTTP/1.1, and a current network is in the medium congestion. In this case, the file request is redirected to a recommended bit rate file:
Location:http://sever.example.com /media_540k.mp4?Networkstate= MediumCongestion, where the URL in the recommended bit rate file includes a file whose bit rate is 540 kbps, the file whose bit rate is 540 kbps is extended, and the network congestion information is added to notify the user of the network status. Continuity of video transmission is ensured when the network is in the medium congestion by reducing a transmission bit rate of the video, so that a degree of smoothness in which the user watches the video is not affected by the network congestion.

Alternatively, the file request is redirected to a URL of the video file that may be provided for the UE by using the dedicated bearer, and a corresponding condition is added:
Pay-Location-1:http://sever.example.com /media_720k.mp4?ChargingRule= ChargingRule1,
Pay-Location-2:http://sever.example.com /media_900k.mp4?ChargingRule= ChargingRule2,
Pay-Location-3:http://sever.example.com/media_1000k.mp4?ChargingRule = ChargingRule3,
Pay-Location-4:http://sever.example.com /media_720k.mp4?Rule=AD insertion.

In this manner, smoothness and definition of watching the video are ensured by paying extra expense or watching an inserted advertisement by the user. A file including expense payment provides three selective types: Pay-Location-1, Pay-Location-2, and Pay-Location-3, and a file including the inserted advertisement is Pay-Location-4, where a Pay-Location header field definition is added, indicating that this file is a file that requires payment or that can be received only when the user watches an advertisement. The URL includes a bit rate of the file and a providing condition of the file corresponding to the bit rate, and a corresponding type is selected according to the network congestion situation and a video bit rate requested by the user. For example, the current network is in the medium congestion and the user requests to watch a video file whose video bit rate is 900 kbps, and in this case, a type of Pay-Location-2 needs to be selected and corresponding expense needs to be paid. When a degree of the network congestion remains unchanged, a higher bit rate indicates more payment required; when the video bit rate requested by the user remains unchanged, a higher degree of network congestion indicates more payment required.

316. The proxy server sends an acknowledgement message to the P-GW.

317. The P-GW forwards the acknowledgement message to the UE.

The P-GW forwards the acknowledgement message in step 315 to the UE.

318. The UE sends the request for the video file according to a choice of the user.

The user performs selection according to the acknowledgement message provided by the UE, and the UE then sends the request for the video file. If the user selects a file including the providing condition, the request for the video file should further include an indication that approves the providing condition of the video file.

In this embodiment, in an example in which the user chooses to continue to request, by means of payment, a video file whose bit rate is 1000 kbps, the request for the video file includes a payment indication corresponding to the ChargingRule3.

319. The P-GW forwards the request for the video file to the proxy server.

320. The proxy server negotiates with the PCRF according to the request for the video file.

The request that is for the video file and that is received by the proxy server includes the payment indication corresponding to the ChargingRule3, indicating that the user requests, by means of payment, the video file whose bit rate is 1000 kbps, and in this case, the proxy server sends the request for the video file whose bit rate is 1000 kbps to the PCRF.

321. The PCRF initiates a procedure of establishing a dedicated bearer.

It should be noted that the dedicated bearer is established on the basis of establishment of a network link. The dedicated bearer is established to provide a specific service quality transmission requirement that cannot be met by a default bearer. The network establishes, by means of paying extra expense by the user, the dedicated bearer for a service requested by the user, and transmits the video file by using the dedicated bearer, so as to ensure the smoothness and the definition in which the user watches the video.

The PCRF receives the request for the video file whose bit rate is 1000 kbps; however, the current network is in a congested state, and therefore the dedicated bearer needs to be established to transmit a file for the user. In this case, the PCRF starts the procedure of establishing the dedicated bearer, and establishes the dedicated bearer between the UE and the network.

322. The proxy server sends, by using the dedicated bearer, the request for the video file whose bit rate is 1000 kbps to the content server.

323. The content server returns the video file whose bit rate is 1000 kbps.

324. The proxy server forwards the video file whose bit rate is 1000 kbps to the P-GW.

325. The P-GW forwards the video file whose bit rate is 1000 kbps to the UE.

It should be noted that if in step 318, the UE requests a recommended bit rate file when sending the request for the video file, there is no need to execute step 320 and step 321, and in step 322, the proxy server directly forwards the request for the video file to the content server, and after the content server returns a corresponding video file, the proxy server forwards the video file to the UE. In step 318, the user chooses to continue to request, by means of payment, the video file whose bit rate is 1000 kbps, and in this case, the proxy server charges the user for corresponding expense when forwarding the video file whose bit rate is 1000 kbps to the UE by using the dedicated bearer. If the user selects a manner of watching an inserted advertisement to acquire a corresponding video file, the proxy server first plays a corresponding advertisement to the user when forwarding the video file whose bit rate is 1000 kbps to the UE by using the dedicated bearer.

It should be noted that for a progressively downloaded video service, there is no need to download a media presentation description file, that is, there is no need to execute step 302 to step 307. The information about the video service carried in the query request in step 310 may bear, after the UE requests a video page, an HTML (Hyper Text Mark-up Language, hyper text mark-up language) page in a returned HTTP (HTTP-Hypertext transfer protocol, HTTP-Hypertext Transfer Protocol) response, where the page carries an address of the video file, and carries URL addresses of all bit rates of this video. The proxy server may acquire the video information by intercepting and parsing a reply message corresponding to a request message of the video page.

In the prior art, when some special scenarios occur on a network, for example, the network is congested, to ensure that a user can continue to watch a video, a client requests to reduce a bit rate of a playing video, or requests not to reduce a bit rate but needs to perform caching, which reduces service quality of the network, and causes so much inconvenience when the user watches the video. Compared with the prior art, according to this embodiment of the present invention, a proxy server is configured in a PCC architecture, and the proxy server requests, according to a video sent by UE, a PCRF to query a network status of a network. When network status information of a cell does not meet a network condition required by a video request service sent by the UE, the proxy server sends an acknowledgement message to the UE, and inquires whether the user approves using, under a providing condition of a video file, the video file. When the user returns a result of approving the providing condition, the proxy server requests the PCRF to establish a dedicated bearer of video transmission for the UE, and uses the dedicated bearer to forward, to user equipment, a video file of a bit rate required by the user. Therefore, in the case of network congestion, a clear video file can still be provided, and the service quality of the network can still be ensured.

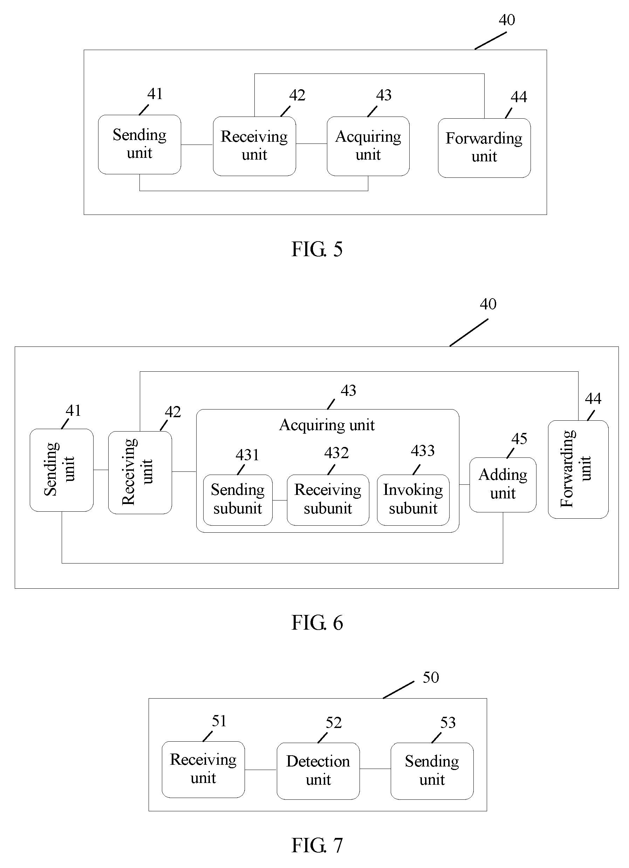

Still another embodiment of the present invention provides an apparatus 40 for delivering a network video. As shown in FIG. 5, the apparatus 40 includes:
a sending unit 41, configured to send a query request to a policy and charging rules function unit PCRF according to a video request sent by user equipment UE, where the video request is used to request a video file of a first bit rate, and the query request is used to query network status information of a cell that the UE accesses;
a receiving unit 42, configured to receive indication information sent by the PCRF, where the indication information includes the network status information of the cell that the UE accesses, and acquire the network status information of the cell from the indication information;
an acquiring unit 43, configured to acquire, when service quality information of the cell does not meet the video request sent by the UE, a providing condition of the video file according to the video request, where the providing condition is a condition under which a dedicated bearer is used to provide the UE with the video file of the first bit rate; where
the sending unit 41 is further configured to send an acknowledgement message to the UE, where the acknowledgement message carries the providing condition of the video file, and the acknowledgement message is used to confirm whether the UE approves the providing condition of the video file; and
the receiving unit 42 is further configured to receive a second video request sent by the UE, where the second video request includes an indication that the UE approves the providing condition of the video file according to the acknowledgement message; and
a forwarding unit 44, configured to perform an operation corresponding to the providing condition of the video file, and forward, to the UE by using an established dedicated bearer, a video file corresponding to the second video request received by the receiving unit 42.

The providing condition is a condition under which a dedicated bearer is used to provide the UE with the video file of a first bit rate. The providing condition may include: paid providing (such as charging), an inserted advertisement, or a push message. The providing condition may be any one or several combinations of the foregoing conditions, or certainly may be another condition. Different providing conditions correspond to different operations. For example, the paid providing corresponds to a charging operation; when the providing condition is the inserted advertisement, the proxy server corresponds to an advertisement inserting operation; and when the providing condition is the push message, the proxy server performs a message pushing operation. Certainly, the providing condition may also be another situation.

The indication information further includes a recommended bit rate, where the recommended bit rate is a video transmission bit rate that matches the network status information of the cell. The second video request includes an indication that the UE requests, according to the acknowledgement message, the video file corresponding to the recommended bit rate.

Further, as shown in FIG. 6, the acquiring unit 43 includes:
a sending subunit 431, configured to send, to the PCRF, a request for the providing condition of the video file corresponding to the video request;
a receiving subunit 432, configured to receive the providing condition sent by the PCRF; or
an invoking subunit 433, configured to invoke the providing condition from pre-stored information according to the video request.

Further, as shown in FIG. 6, the apparatus 40 further includes:
an adding unit 45, configured to add the providing condition to a uniform resource locator URL of the video file of the first bit rate, and construct the acknowledgement message.

Further, the adding unit 45 is further configured to add the network status information to a URL of a video file corresponding to the recommended bit rate, and construct the acknowledgement message.

Further, the forwarding unit 44 is further configured to forward, to the UE, the video file corresponding to the recommended bit rate received by the receiving unit 42.

Further, the sending unit 41 is further configured to send a negotiation request to the PCRF, so that the PCRF initiates, according to the negotiation request, a procedure of establishing a dedicated bearer between the UE and the PCRF.

In the prior art, when some special scenarios occur on a network, for example, the network is congested, to ensure that a user can continue to watch a video, a client requests to reduce a bit rate of a playing video, or requests not to reduce a bit rate but needs to perform caching, which reduces service quality of the network, and causes so much inconvenience when the user watches the video. Compared with the prior art, according to this embodiment of the present invention, an apparatus 40 is configured in a PCC architecture, and the apparatus 40 requests, according to a video sent by UE, a PCRF to query a network status of a network. When network status information of a cell does not meet a network condition required by a video request service sent by the UE, the apparatus 40 sends an acknowledgement message to the UE, and inquires whether the user approves using, under a providing condition of a video file, the video file. When the user returns a result of approving the providing condition, the apparatus 40 requests the PCRF to establish a dedicated bearer of video transmission for the UE, and uses the dedicated bearer to forward, to user equipment, a video file of a bit rate required by the user. Therefore, in the case of network congestion, a clear video file can still be provided, and the service quality of the network can still be ensured.

Still another embodiment of the present invention provides an apparatus 50 for delivering a network video. As shown in FIG. 7, the apparatus 50 includes:
a receiving unit 51, configured to receive a query request sent by a proxy server;
a detection unit 52, configured to detect, according to the query request, network status information of a cell to which user equipment UE is connected; and
a sending unit 53, configured to send indication information to the proxy server, where the indication information includes the network status information.

The indication information further includes the recommended bit rate.

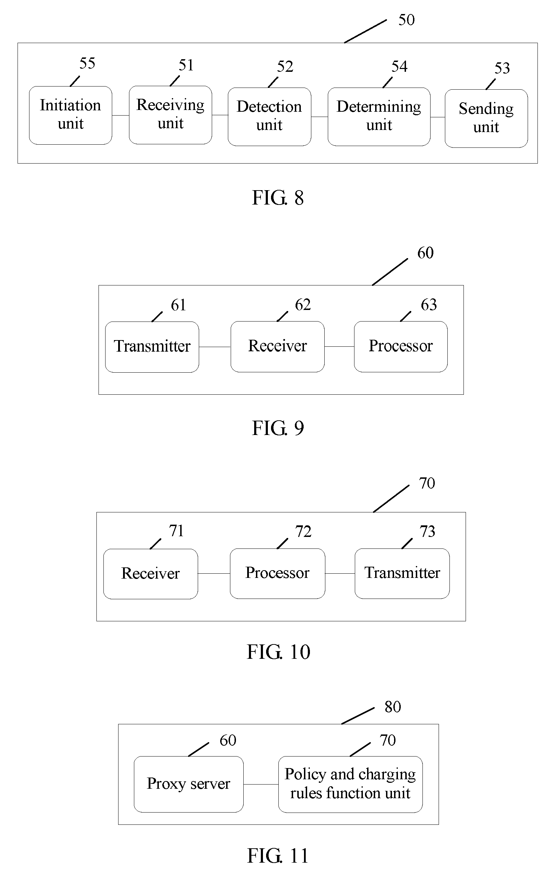

Further, as shown in FIG. 8, the apparatus 50 further includes:
a determining unit 54, configured to determine a recommended bit rate according to the network status information detected by the detection unit 52, where the recommended bit rate is a video transmission bit rate that matches the network status information of the cell.

Further, the receiving unit 51 is further configured to receive a request that is for a providing condition of a video file and that is sent by the proxy server; and
the sending unit 53 is further configured to send the providing condition to the proxy server.

The providing condition is a condition under which a dedicated bearer is used to provide the UE with the video file of a first bit rate. The providing condition may include: paid providing (such as charging), an inserted advertisement, or a push message. The providing condition may be any one or several combinations of the foregoing conditions, or certainly may be another condition. Different providing conditions correspond to different operations. For example, the paid providing corresponds to a charging operation; when the providing condition is the inserted advertisement, the proxy server corresponds to an advertisement inserting operation; and when the providing condition is the push message, the proxy server performs a message pushing operation. Certainly, the providing condition may also be another situation.

Further, the receiving unit 51 is further configured to receive a negotiation request sent by the proxy server, where the negotiation request is used to establish, by means of negotiation, a dedicated bearer by the proxy server and the PCRF.

Further, as shown in FIG. 8, the apparatus 50 further includes:
an initiation unit 55, configured to initiate a procedure of establishing a dedicated bearer between the UE and the PCRF.

In the prior art, when some special scenarios occur on a network, for example, the network is congested, to ensure that a user can continue to watch a video, a client requests to reduce a bit rate of a playing video, or requests not to reduce a bit rate but needs to perform caching, which reduces service quality of the network, and causes so much inconvenience when the user watches the video. Compared with the prior art, according to this embodiment of the present invention, a proxy server is configured in a PCC architecture, and the proxy server requests, according to a video sent by UE, an apparatus 50 to query a network status of a network. When network status information of a cell does not meet a network condition required by a video request service sent by the UE, the proxy server sends an acknowledgement message to the UE, and inquires whether the user approves using, under a providing condition of a video file, the video file. When the user returns a result of approving the providing condition, the proxy server requests the apparatus 50 to establish a dedicated bearer of video transmission for the UE, and uses the dedicated bearer to forward, to user equipment, a video file of a bit rate required by the user. Therefore, in the case of network congestion, a clear video file can still be provided, and the service quality of the network can still be ensured.

Still another embodiment of the present invention provides a proxy server 60. As shown in FIG. 9, the proxy server 60 includes:
a transmitter 61, configured to send a query request to a policy and charging rules function unit PCRF according to a video request sent by user equipment UE, where the video request is used to request a video file of a first bit rate, and the query request is used to query network status information of a cell that the UE accesses;
a receiver 62, configured to receive indication information sent by the PCRF, where the indication information includes the network status information of the cell that the UE accesses, and acquire the network status information of the cell from the indication information; and
a processor 63, configured to acquire, when service quality information of the cell does not meet the video request sent by the UE, a providing condition of the video file according to the video request, where the providing condition is a condition under which a dedicated bearer is used to provide the UE with the video file of the first bit rate; where
the transmitter 61 is further configured to send an acknowledgement message to the UE, where the acknowledgement message carries the providing condition of the video file, and the acknowledgement message is used to confirm whether the UE approves the providing condition of the video file;
the receiver 62 is further configured to receive a second video request sent by the UE, where the second video request includes an indication that the UE approves the providing condition of the video file according to the acknowledgement message; and
the transmitter 61 is further configured to perform an operation corresponding to the providing condition of the video file, and forward, by using an established dedicated bearer, a video file corresponding to the second video request to the UE.

The providing condition is a condition under which a dedicated bearer is used to provide the UE with the video file of a first bit rate. The providing condition may include: paid providing (such as charging), an inserted advertisement, or a push message. The providing condition may be any one or several combinations of the foregoing conditions, or certainly may be another condition. Different providing conditions correspond to different operations. For example, the paid providing corresponds to a charging operation; when the providing condition is the inserted advertisement, the proxy server corresponds to an advertisement inserting operation; and when the providing condition is the push message, the proxy server performs a message pushing operation. Certainly, the providing condition may also be another situation.

The second video request includes an indication that the UE requests, according to the acknowledgement message, the video file corresponding to the recommended bit rate; the indication information further includes a recommended bit rate, and the recommended bit rate is a video transmission bit rate that matches the network status information of the cell.

Further, the transmitter 61 is further configured to send, to the PCRF, the providing condition of the video file corresponding to the video request;
the receiver 62 is further configured to receive the providing condition sent by the PCRF; or
the processor 63 is further configured to invoke the providing condition from pre-stored information according to the video request.

Further, the processor 63 is further configured to add the providing condition to a uniform resource locator URL of the video file of the first bit rate, and construct the acknowledgement message.

Further, the processor 63 is further configured to add the network status information to a URL of a video file corresponding to the recommended bit rate, and construct the acknowledgement message.

Further, the transmitter 61 is further configured to forward the video file corresponding to the recommended bit rate to the UE.

Further, the transmitter 61 is further configured to send a negotiation request to the PCRF, so that the PCRF initiates, according to the negotiation request, a procedure of establishing a dedicated bearer between the UE and the PCRF.

In the prior art, when some special scenarios occur on a network, for example, the network is congested, to ensure that a user can continue to watch a video, a client requests to reduce a bit rate of a playing video, or requests not to reduce a bit rate but needs to perform caching, which reduces service quality of the network, and causes so much inconvenience when the user watches the video. Compared with the prior art, according to this embodiment of the present invention, a proxy server 60 is configured in a PCC architecture, and the proxy server 60 requests, according to a video sent by UE, a PCRF to query a network status. When network status information of a cell does not meet a network condition required by a video request service sent by the UE, the proxy server 60 sends an acknowledgement message to the UE, and inquires whether the user approves using, under a providing condition of a video file, the video file. When the user returns a result of approving the providing condition, the proxy server 60 requests the PCRF to establish a dedicated bearer of video transmission for the UE, and uses the dedicated bearer to forward, to user equipment, a video file of a bit rate required by the user. Therefore, in the case of network congestion, a clear video file can still be provided, and the service quality of the network can still be ensured.

Still another embodiment of the present invention provides a policy and charging rules function unit PCRF 70. As shown in FIG. 10, the policy and charging rules function 70 includes:
a receiver 71, configured to receive a query request sent by a proxy server;
a processor 72, configured to detect, according to the query request, network status information of a cell to which user equipment UE is connected; and
a transmitter 73, configured to send indication information to the proxy server, where the indication information includes the network status information.

The indication information further includes the recommended bit rate.

Further, the processor 72 is further configured to determine a recommended bit rate according to the network status information, where the recommended bit rate is a video transmission bit rate that matches the network status information of the cell.

Further, the receiver 71 is further configured to receive a request that is for a providing condition of a video file and that is sent by the proxy server; and
the processor 72 is further configured to send the providing condition to the proxy server.

The providing condition is a condition under which a dedicated bearer is used to provide the UE with the video file of a first bit rate. The providing condition may include: paid providing (such as charging), an inserted advertisement, or a push message. The providing condition may be any one or several combinations of the foregoing conditions, or certainly may be another condition. Different providing conditions correspond to different operations. For example, the paid providing corresponds to a charging operation; when the providing condition is the inserted advertisement, the proxy server corresponds to an advertisement inserting operation; and when the providing condition is the push message, the proxy server performs a message pushing operation. Certainly, the providing condition may also be another situation.

Further, the receiver 71 is further configured to receive a negotiation request sent by the proxy server, where the negotiation request is used to establish, by means of negotiation, a dedicated bearer by the proxy server and the PCRF 70; and
the processor 72 is further configured to initiate a procedure of establishing a dedicated bearer between the UE and the PCRF 70.

In the prior art, when some special scenarios occur on a network, for example, the network is congested, to ensure that a user can continue to watch a video, a client requests to reduce a bit rate of a playing video, or requests not to reduce a bit rate but needs to perform caching, which reduces service quality of the network, and causes so much inconvenience when the user watches the video. Compared with the prior art, according to this embodiment of the present invention, a proxy server is configured in a PCC architecture, and the proxy server requests, according to a video sent by UE, a PCRF 70 to query a network status of a network. When network status information of a cell does not meet a network condition required by a video request service sent by the UE, the proxy server sends an acknowledgement message to the UE, and inquires whether the user approves using, under a providing condition of a video file, the video file. When the user returns a result of approving the providing condition, the proxy server requests the PCRF 70 to establish a dedicated bearer of video transmission for the UE, and uses the dedicated bearer to forward, to user equipment, a video file of a bit rate required by the user. Therefore, in the case of network congestion, a clear video file can still be provided, and the service quality of the network can still be ensured.

Still another embodiment of the present invention provides a system 80 for delivering a network video. As shown in FIG. 11, the system 80 includes the proxy server 60 and the policy and charging rules function 70.

An apparatus for delivering the network video provided in this embodiment of the present invention can implement the method embodiments provided above. For specific function implementation, reference may be made to descriptions in the method embodiments, and details are not described herein again. A method, an apparatus, and a system for delivering a network video provided in embodiments of the present invention may be applicable to a policy and charging control PCC architecture in a wireless network, but are not limited thereto.

The embodiments in this specification are all described in a progressive manner, for same or similar parts in the embodiments, reference may be made to these embodiments, and each embodiment focuses on a difference from other embodiments. Especially, a device embodiment is basically similar to a method embodiment, and therefore is described briefly; for related parts, reference may be made to partial descriptions in the method embodiment.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for delivering a network video, comprising:
sending, by a proxy server, a query request to a policy and charging rules function unit PCRF according to a video request sent by user equipment UE, wherein the video request is used to request a video file of a first bit rate, and the query request is used to query network status information of a cell that the UE accesses;
receiving, by the proxy server, indication information sent by the PCRF, wherein the indication information comprises the network status information of the cell that the UE accesses, and acquiring the network status information of the cell from the indication information;
acquiring, by the proxy server when the network status information of the cell does not meet a network condition required by the video request service sent by the UE, a providing condition of the video file according to the video request, wherein the providing condition is a condition under which a dedicated bearer is used to provide the UE with the video file of the first bit rate;
sending, by the proxy server, an acknowledgement message to the UE, wherein the acknowledgement message carries the providing condition of the video file, and the acknowledgement message is used to confirm whether the UE approves the providing condition of the video file;
receiving, by the proxy server, a second video request sent by the UE, wherein the second video request comprises an indication that the UE approves the providing condition of the video file according to the acknowledgement message; and
performing, by the proxy server, an operation corresponding to the providing condition of the video file, and forwarding, by using an established dedicated bearer, a video file corresponding to the second video request to the UE.

2. The method according to claim 1, wherein the acquiring, by the proxy server when the network status information of the cell does not meet a network condition required by the video request service sent by the UE, a providing condition of the video file according to the video request comprises:
sending, by the proxy server to the PCRF, a request for the providing condition of the video file corresponding to the video request; and
receiving, by the proxy server, the providing condition sent by the PCRF; or
invoking, by the proxy server, the providing condition from pre-stored information according to the video request.

3. The method according to claim 1 or 2, wherein before the sending, by the proxy server, an acknowledgement message to the UE, the method further comprises:
adding the providing condition to a uniform resource locator URL of the video file of the first bit rate, and constructing the acknowledgement message.

4. The method according to claim 1, wherein the indication information further comprises a recommended bit rate, and the recommended bit rate is a video transmission bit rate that matches the network status information of the cell.

5. The method according to claim 4, wherein before the sending, by the proxy server, an acknowledgement message to the UE, the method further comprises:
adding the network status information to a URL of a video file corresponding to the recommended bit rate, and constructing the acknowledgement message.

6. The method according to claim 5, wherein the second video request comprises an indication that the UE requests, according to the acknowledgement message, the video file corresponding to the recommended bit rate;
and in this case, the method further comprises:
forwarding, by the proxy server, the video file corresponding to the recommended bit rate to the UE.

7. The method according to claim 1, wherein before the performing, by the proxy server, an operation corresponding to the providing condition of the video file, and forwarding, by using an established dedicated bearer, a video file corresponding to the second video request to the UE, the method further comprises:
sending, by the proxy server, a negotiation request to the PCRF, so that the PCRF initiates, according to the negotiation request, a procedure of establishing a dedicated bearer between the UE and the PCRF.

8. A method for delivering a network video, comprising:
receiving, by a policy and charging rules function unit PCRF, a query request sent by a proxy server;
detecting, by the PCRF according to the query request, network status information of a cell to which user equipment UE is connected; and
sending, by the PCRF, indication information to the proxy server, wherein the indication information comprises the network status information.

9. The method according to claim 8, wherein before the sending, by the PCRF, indication information to the proxy server, the method further comprises:
determining, by the PCRF, a recommended bit rate according to the network status information, wherein the recommended bit rate is a video transmission bit rate that matches the network status information of the cell.

10. The method according to claim 9, wherein the indication information further comprises the recommended bit rate.

11. The method according to claim 8, wherein after the sending, by the PCRF, indication information to the proxy server, the method further comprises:
receiving, by the PCRF, a request that is for a providing condition of a video file and that is sent by the proxy server; and
sending, by the PCRF, the providing condition to the proxy server.

12. The method according to claim 8, wherein after the sending, by the PCRF, indication information to the proxy server, the method further comprises:
receiving, by the PCRF, a negotiation request sent by the proxy server, wherein the negotiation request is used to establish, by means of negotiation, a dedicated bearer by the proxy server and the PCRF; and
initiating, by the PCRF, a procedure of establishing a dedicated bearer between the UE and the PCRF.

13. An apparatus for delivering a network video, comprising:
a sending unit, configured to send a query request to a policy and charging rules function unit PCRF according to a video request sent by user equipment UE, wherein the video request is used to request a video file of a first bit rate, and the query request is used to query network status information of a cell that the UE accesses;
a receiving unit, configured to receive indication information sent by the PCRF, wherein the indication information comprises the network status information of the cell that the UE accesses, and acquire the network status information of the cell from the indication information;
an acquiring unit, configured to acquire, when the network status information of the cell does not meet a network condition required by the video request service sent by the UE, a providing condition of the video file according to the video request, wherein the providing condition is a condition under which a dedicated bearer is used to provide the UE with the video file of the first bit rate; wherein
the sending unit is further configured to send an acknowledgement message to the UE, wherein the acknowledgement message carries the providing condition of the video file, and the acknowledgement message is used to confirm whether the UE approves the providing condition of the video file; and
the receiving unit is further configured to receive a second video request sent by the UE, wherein the second video request comprises an indication that the UE approves the providing condition of the video file according to the acknowledgement message; and
a forwarding unit, configured to perform an operation corresponding to the providing condition of the video file, and forward, to the UE by using an established dedicated bearer, a video file corresponding to the second video request received by the receiving unit.

14. The apparatus according to claim 13, wherein the acquiring unit comprises:
a sending subunit, configured to send, to the PCRF, a request for the providing condition of the video file corresponding to the video request;
a receiving subunit, configured to receive the providing condition sent by the PCRF; or
an invoking subunit, configured to invoke the providing condition from pre-stored information according to the video request.

15. The apparatus according to claim 13 or 14, wherein the apparatus further comprises:
an adding unit, configured to add the providing condition to a uniform resource locator URL of the video file of the first bit rate, and construct the acknowledgement message.

16. The apparatus according to claim 13, wherein the indication information further comprises a recommended bit rate, and the recommended bit rate is a video transmission bit rate that matches the network status information of the cell.

17. The apparatus according to claim 16, wherein the adding unit is further configured to add the network status information to a URL of a video file corresponding to the recommended bit rate, and construct the acknowledgement message.

18. The apparatus according to claim 17, wherein the second video request comprises an indication that the UE requests, according to the acknowledgement message, the video file corresponding to the recommended bit rate;
and in this case, the forwarding unit is further configured to forward, to the UE, the video file corresponding to the recommended bit rate received by the receiving unit.

19. The apparatus according to claim 13, wherein the sending unit is further configured to send a negotiation request to the PCRF, so that the PCRF initiates, according to the negotiation request, a procedure of establishing a dedicated bearer between the UE and the PCRF.

20. An apparatus for delivering a network video, comprising:
a receiving unit, configured to receive a query request sent by a proxy server;
a detection unit, configured to detect, according to the query request, network status information of a cell to which user equipment UE is connected; and
a sending unit, configured to send indication information to the proxy server, wherein the indication information comprises the network status information.

21. The apparatus according to claim 20, wherein the apparatus further comprises:
a determining unit, configured to determine a recommended bit rate according to the network status information detected by the detection unit, wherein the recommended bit rate is a video transmission bit rate that matches the network status information of the cell.

22. The apparatus according to claim 21, wherein the indication information further comprises the recommended bit rate.

23. The apparatus according to claim 20, wherein the receiving unit is further configured to receive a request that is for a providing condition of a video file and that is sent by the proxy server; and
the sending unit is further configured to send the providing condition to the proxy server.

24. The apparatus according to claim 20, wherein the receiving unit is further configured to receive a negotiation request sent by the proxy server, and the negotiation request is used to establish, by means of negotiation, a dedicated bearer by the proxy server and the PCRF; and
the apparatus further comprises:
an initiation unit, configured to initiate a procedure of establishing a dedicated bearer between the UE and the PCRF.

25. A proxy server, comprising:
a transmitter, configured to send a query request to a policy and charging rules function unit PCRF according to a video request sent by user equipment UE, wherein the video request is used to request a video file of a first bit rate, and the query request is used to query network status information of a cell that the UE accesses;
a receiver, configured to receive indication information sent by the PCRF, wherein the indication information comprises the network status information of the cell that the UE accesses, and acquire the network status information of the cell from the indication information; and
a processor, configured to acquire, when the network status information of the cell does not meet a network condition required by the video request service sent by the UE, a providing condition of the video file according to the video request, wherein the providing condition is a condition under which a dedicated bearer is used to provide the UE with the video file of the first bit rate; wherein
the transmitter is further configured to send an acknowledgement message to the UE, wherein the acknowledgement message carries the providing condition of the video file, and the acknowledgement message is used to confirm whether the UE approves the providing condition of the video file;
the receiver is further configured to receive a second video request sent by the UE, wherein the second video request comprises an indication that the UE approves the providing condition of the video file according to the acknowledgement message; and
the transmitter is further configured to perform an operation corresponding to the providing condition of the video file, and forward, by using an established dedicated bearer, a video file corresponding to the second video request to the UE.

26. The proxy server according to claim 25, wherein the transmitter is further configured to send, to the PCRF, a request for the providing condition of the video file corresponding to the video request;
the receiver is further configured to receive the providing condition sent by the PCRF; or
the processor is further configured to invoke the providing condition from pre-stored information according to the video request.

27. The proxy server according to claim 25 or 26, wherein the processor is further configured to add the providing condition to a uniform resource locator URL of the video file of the first bit rate, and construct the acknowledgement message.

28. The proxy server according to claim 25, wherein the indication information further comprises a recommended bit rate, and the recommended bit rate is a video transmission bit rate that matches the network status information of the cell.

29. The proxy server according to claim 28, wherein the processor is further configured to add the network status information to a URL of a video file corresponding to the recommended bit rate, and construct the acknowledgement message.

30. The proxy server according to claim 29, wherein the second video request comprises an indication that the UE requests, according to the acknowledgement message, the video file corresponding to the recommended bit rate;
and in this case, the transmitter is further configured to forward the video file corresponding to the recommended bit rate to the UE.

31. The proxy server according to claim 25, wherein the transmitter is further configured to send a negotiation request to the PCRF, so that the PCRF initiates, according to the negotiation request, a procedure of establishing a dedicated bearer between the UE and the PCRF.

32. A policy and charging rules function, comprising:
a receiver, configured to receive a query request sent by a proxy server;
a processor, configured to detect, according to the query request, network status information of a cell to which user equipment UE is connected; and
a transmitter, configured to send indication information to the proxy server, wherein the indication information comprises the network status information.

33. The policy and charging rules function according to claim 32, wherein the processor is further configured to determine a recommended bit rate according to the network status information, and the recommended bit rate is a video transmission bit rate that matches the network status information of the cell.

34. The policy and charging rules function according to claim 33, wherein the indication information further comprises the recommended bit rate.

35. The policy and charging rules function according to claim 32, wherein the receiver is further configured to receive a request that is for a providing condition of a video file and that is sent by the proxy server; and
the processor is further configured to send the providing condition to the proxy server.

36. The policy and charging rules function according to claim 32, wherein the receiver is further configured to receive a negotiation request sent by the proxy server, and the negotiation request is used to establish, by means of negotiation, a dedicated bearer by the proxy server and the PCRF; and
the processor is further configured to initiate a procedure of establishing a dedicated bearer between the UE and the PCRF.

37. A system for delivering a network video, comprising the proxy server according to claims 25 to 31, and the policy and charging rules function according to claims 32 to 36.
